(19) Europäisches Patentamt
European Patent Office
Office européen des brevets

(11) EP 2 026 326 A1

(12) **EUROPEAN PATENT APPLICATION**
published in accordance with Art. 153(4) EPC

(43) Date of publication:
**18.02.2009 Bulletin 2009/08**

(21) Application number: **07791257.4**

(22) Date of filing: **25.07.2007**

(51) Int Cl.:
***G10K 11/178*** *(2006.01)* ***B60R 11/02*** *(2006.01)*
***H04R 3/00*** *(2006.01)* ***H04R 9/04*** *(2006.01)*

(86) International application number:
**PCT/JP2007/064539**

(87) International publication number:
**WO 2008/013184 (31.01.2008 Gazette 2008/05)**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **26.07.2006 JP 2006202771**

(71) Applicant: **Panasonic Corporation**
**Kadoma-shi**
**Osaka 571-8501 (JP)**

(72) Inventors:
- **HAYASHI, Yoshiyuki**
**2-1-61, Shiromi,Chuo-ku,**
**Osaka 540-6207 (JP)**
- **NAKAMURA,Yoshio**
**2-1-61, Shiromi,Chuo-ku,**
**Osaka 540-6207 (JP)**
- **ANDO, Kimihiro**
**2-1-61, Shiromi,Chuo-ku,**
**Osaka 540-6207 (JP)**
- **UMEMURA,Kazuyoshi**
**2-1-61, Shiromi,Chuo-ku,**
**Osaka 540-6207 (JP)**
- **OKI,Shinichi**
**2-1-61, Shiromi,Chuo-ku,**
**Osaka 540-6207 (JP)**
- **OKAMOTO,Kenji**
**2-1-61, Shiromi,Chuo-ku,**
**Osaka 540-6207 (JP)**

(74) Representative: **Grünecker, Kinkeldey,**
**Stockmair & Schwanhäusser**
**Anwaltssozietät**
**Leopoldstrasse 4**
**80802 München (DE)**

# (54) ACTIVE NOISE REDUCTION SYSTEM

(57) An electromechanical converter (2) has independent electric input sections (3,4). The output of an active noise reduction controller (1) is inputted into an electric input section (3) and the audio signal from an audio section (9) is inputted into an electric input section (4). These are mechanically combined at a vibration section (7) and the combined signal is radiated as a sound wave into the space (8). With such a structure, both the active noise reduction function and the audio reproduction function are realized without installing a large device in an existing audio reproduction apparatus.

FIG. 1

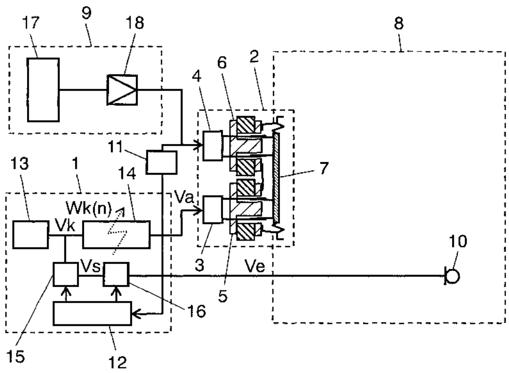


EP 2 026 326 A1

## Description

TECHNICAL FIELD

The present invention relates to an active noise reduction system which reduces vibration noises by means of an active procedure; describing more specifically, an active mode system for reducing noises in an automobile room with the possible influences to be caused on the existing structure of a car or an apparatus limited to a minimum.

BACKGROUND ART

In a generally-known active noise reduction system, it extracts a signal that is closely related with a noise, processes the signal with an applicable filter, and then the signal is added to an electromechanical converter, or a speaker. Noise is reduced by having the thus processed signal, or an interference wave signal, to interfere with the noise.

Most of the automobiles nowadays are equipped with an audio system or the like apparatus as the standard equipment. It may be reasonable for an active noise reduction system to make use of the amplifier and the electromechanical transducer, or a speaker, contained in the audio equipment in common. Actually, there has been a proposal of car-borne active noise reduction system which is designed integrating audio equipment of a car, as an exemplary application of active noise reduction system in the field of automobile.

In the conventional active noise reduction system, an electric signal for noise reduction is added up electrically on an audio signal coming from audio controller. The synthesized electric signal is amplified by a power amplifier, and then inputted into a speaker provided for reproducing the audio sound. In this way, the conventional noise reduction system realizes both the noise reduction function and the audio reproduction function.

Particulars of the above technology are disclosed in Patent Document 1.

In the above-described conventional noise reduction system integrated with existing audio system, however, the function of noise reduction needs to be kept operating even when the audio system is switched OFF. Therefore, at least power amplifier of the audio system needs to be kept operating regardless of a switch-OFF action at the audio system. Namely, at least the power amplifier, among other constituent portions of the audio system, has to be provided so as it is put into operation by a signal generated from the ignition switch of a car, for example, irrespective of the audio switch.

Furthermore, if an audio system is switched ON during the noise reduction function alone is in operation, a transient noise (popping sound) might arise at the start-up of audio controller section disposed before the power amplifier. In order to prevent this to occur, the power amplifier is required to detect that the audio switch was turned ON, and to mute a signal from the audio controller for a certain moment, for example. Thus, an existing audio system is compelled to undergo a substantial design change and modification.

Still further, supply voltage to a car-borne audio system is generally 12 V, and the final stage of power amplifier is BTL (Bridged TransformerLess). Therefore, the audio output Pmax during reproduction of audio alone (the theoretical zero-distortion maximum output power at 4 Ω speaker impedance) is:

$$Pmax = Vcc^2 / (2 \times 4) = 18\ W$$

where; Vcc is source voltage=12V.

Assuming the output power Po is 1 W needed for noise reduction, the peak value Vne of noise control signal required for the purpose becomes:

$$Vne = \sqrt{8 \times Po} = 2.83\ V$$

Since the audio signal and the noise control signal have been electrically added up, theoretical zero-distortion max. output Pne of audio signal satisfying the 1 W required for the noise control (noise control signal voltage is 2.83V (peak value)) becomes:

$$Pne = (12 - 2.83)^2 / (2 \times 4) = 10.5\ W.$$

In other words; if a 1 W power is needed for the noise reduction, audio signal's theoretical zero-distortion max. output power decreases significantly from 18 W to 10.5 W.
[Patent Document 1]
Japanese Patent Unexamined Publication No. H6-130971

SUMMARY OF THE INVENTION

For implementing an active noise reduction system in combination with existing audio system, an active noise reduction system in the present invention couples audio signal with noise control signal mechanically at an electromechanical converter. An active noise reduction system of the above-described structure requires no substantial modification with an existing audio system.
In order to reduce such noises caused by a noise generating source, an active noise reduction system in accordance with the present invention includes an active noise reduction controller for generating an interference signal, the amplitude of which signal being the same as that of the noise and reverse-phased, a plurality of independent electric input sections, and an electromechanical converter for converting the respective electric signals inputted to the electric input sections into mechanical vibration of a vibration section. The noise is reduced by adding the output of active noise reduction controller into at least one of the plurality of electric input sections of electromechanical converter; at the same time, audio signal is inputted into the other electric input section of electromechanical converter for the reproduction of audio signal.
An active noise reduction system in the present invention is provided at its constituent electromechanical converter with a plurality of independent electric input sections, the respective electric signals inputted to the plurality of independent input sections are converted into mechanical vibration at a vibration section. Namely, the plurality of electric signals inputted to the plurality of electric input sections of electromechanical converter are synthesized mechanically at the vibration section. Therefore, there is no need of performing a procedure of electrical add-up. So, a system that is capable of both reducing the noises and reproducing the audio sounds can be realized without a substantial modification in the design or structure of an existing audio system.
Furthermore, an electro-dynamic type speaker is used for the electromechanical converter. Disposed in the magnetic gap of which speaker is a plurality of electrically-independent coils, which coils being mechanically connected with a single diaphragm. One of the coils is supplied with electric signal for controlling the noise, while the other coil is supplied with audio signal. In this way, a system that is capable of performing the functions of noise reduction and audio sound reproduction at the same time can be realized in a simple configuration, without requiring a substantial change in the design or structure of an existing audio system.
Still further, when an input signal including DC signal is detected at an input section, among the plurality of electric input sections of electromechanical converter, other than that which is connected with output from active noise reduction controller, noise control parameter of the active noise reduction controller is modified to compensate a shift in the electromechanical conversion characteristic caused due to signals inputted into the plurality of electric input sections of electromechanical converter. Thereby, a more stable noise reduction system can be realized.

BRIEF DESCRIPTION OF THE DRAWINGS

FIG. 1 is a block diagram which shows an active noise reduction system in accordance a first exemplary embodiment of the present invention.
FIG. 2 shows the structure of an electromechanical converter used in the active noise reduction system of the first embodiment.
FIG. 3 is a characteristics chart which shows the transfer characteristic of an electromechanical converter used in the active noise reduction system of the first embodiment.
FIG. 4 shows other structure of the electromechanical converter used in the active noise reduction system of the first embodiment.

(Reference marks in the drawings)

| | |
|---|---|
| 1 | Active Noise Reduction Controller |
| 2 | Electromechanical Converter |
| 3, 4 | Electric Input Section |
| 5, 6 | Actuator |
| 7 | Vibration Section |
| 8 | Space |
| 9 | Audio Section |
| 10 | Microphone |
| 11 | Audio Section Operation Detector |
| 12 | Control Parameter Modification Section |
| 13 | Criterion Signal Generation Section |
| 14 | Applicable Filter |
| 15 | Transfer Characteristic Compensation Section |
| 16 | Coefficient Renewal Section |
| 17 | Music Source Section |
| 18 | Power Amplifier |
| 19 | Magnet |
| 20 | Yoke |
| 20a | Plate |
| 21 | Magnetic Gap |
| 22a, 22b | Movable Coil |
| 23 | Transfer Characteristic of Electromechanical Converter, with the Power Supply to the Power Amplifier OFF |
| 24 | Transfer Characteristic of Electromechanical Converter, with the Power Supply to the Power Amplifier ON |

## DETAILED DESCRIPTION OF PREFERRED EMBODIMENTS

### FIRST EXEMPLARY EMBODIMENT

An active noise reduction system in accordance with a first exemplary embodiment of the present invention is described with reference to the drawings.

FIG. 1 shows a block diagram of active noise reduction system in the first embodiment. In FIG. 1, active noise reduction controller 1 includes criterion signal generation section 13, applicable filter 14, transfer characteristic compensation section 15, coefficient renewal section 16 and control parameter modification section 12. The controller generates noise interference electric signal Va of approximately the same amplitude as the noise and substantially reverse-phased. Electromechanical converter 2 is provided with two electric input sections 3 and 4, and converts the respective electric inputs into mechanical motions at actuators 5 and 6, respectively. These actuators are mechanically connected to a single vibration section 7. Vibration section 7 vibrates in a state where the motions of actuators 5, 6 are added up, and radiates the sound wave into space 8. Electric input section 3 is connected with the output from active noise reduction controller 1, whereas the other electric input section 4 is connected with the output from audio section 9. Microphone 10 is disposed in space 8 at a location where noise is to be reduced, and detects the result of interference between the original noise and the sound wave radiated from electromechanical converter 2, in the form of error signal Ve. The error signal Ve is led to active noise reduction controller 1 as the feedback. Audio section operation detector 11 detects the operation status of audio section 9, and inputs the detected result into control parameter modification section 12 of active noise reduction controller 1. The operation parameter of active noise reduction controller 1 is thus changed.

Audio section 9 is formed of music sources such as CD, radio broadcast, etc. and power amplifier 18.

Now, the operation of present system is described practically.

In the first place, active noise reduction controller 1 generates at criterion signal generation section 13 a criterion signal Vk that is highly correlated with the noise to be reduced. Describing more practically, if it is a signal from a vibration pickup disposed at the noise source or a cyclic noise caused by revolution of an automobile motor, etc., an impulse train or the like synchronized with the revolution of motor can be used. Applicable filter 14 is an N-tap digital FIR filter whose filter coefficient in the order of k is Wk (n); (n represents dispersion time, k being a natural number 1 through N). The respective filter coefficients are changed by coefficient renewal section 16. Criterion signal Vk undergoes filtering by applicable filter 14, and generates noise interference electric signal Va, as the output of active noise reduction controller 1. Noise interference electric signal Va is inputted into electric input section 3 of electromechanical converter 2, where it is converted by actuator 5 into mechanical motion and transferred to vibration section 7. Mechanical vibration of vibration section 7 is radiated into space 8 as the noise control sound. Microphone 10 detects the results of interference between the noise and the sound wave coming from electromechanical converter 2, in the form of error signal Ve. Transfer characteristic compensation section 15 is formed of digital filter which simulates transfer characteristic of the route starting from output of active noise reduction controller 1 through electromechanical converter 2, until output of microphone 10 via space 8. Transfer characteristic compensation section 15 outputs reference signal Vs into coefficient renewal section 16 after filtering criterion signal Vk. Using the reference signal Vs and the error signal Ve, coefficient renewal section 16 renews the filter coefficient of applicable filter 14 one after another in accordance with the formula shown below:

$$Wk(n+1) = Wk(n) - \mu \times Ve(n) \times Vs(n - k + 1)$$

where, μ is referred to as the convergence coefficient, which is a parameter of importance controlling the coefficient renewal speed in the coefficient renewal calculation.

This algorithm is called the filtered X-LMS. After repeating the above-described coefficient renewal, applicable filter 14 converges so as the noise at microphone 10 which is correlated with criterion signal Vk decreases, or the error signal Ve gets smaller.

Another point of importance with the filtered X-LMS is in the reference signal Vs. Reference signal Vs has to be the criterion signal Vk that has been filtered by a characteristic which precisely simulates the transfer characteristic of the route starting from the output of active noise reduction controller 1 through electromechanical converter 2 until the output of microphone 10 via space 8. Namely, it is important that the filter characteristic of transfer characteristic compensation section 15 coincides with the transfer characteristic of the route starting from the output of active noise reduction controller 1 through electromechanical converter 2 until the output of microphone 10 via space 8. In case there is a serious discrepancy between them, it not only invites a deteriorated noise reduction performance but it could also end up with the divergence in the worst situation.

Meanwhile, the audio output from audio section 9 is inputted into electric input section 4 of electromechanical converter 2, and converted by actuator 6 into mechanical motion to be transferred to vibration section 7. Audio sound is radiated into space 8 as the result of vibration of vibration section 7.

As described in the above, the noise interference electric signal which is outputted from active noise reduction controller 1 and the audio signal from audio section 9 are inputted independently into electromechanical converter 2, and then they are synthesized at vibration section 7 as mechanical vibration. The mechanical vibration thus synthesized at vibration section 7 radiates the noise control sound and the audio sound into space 8. Furthermore, the electrical independence of audio section 9 and active noise reduction controller 1 is substantially maintained, while the audio sound reproduction and the noise control function stand together at a single electromechanical converter 2. As the consequence, an active noise reduction system that does not cause a material influence to the structure of existing audio system can be realized.

Next, the function of audio section operation detector 11 and control parameter modification section 12 are described.

FIG. 2 shows the structure of an electromechanical converter of active noise reduction system in the first embodiment. The electromechanical converter is an electro-dynamic type speaker which operates based on the principle of electromagnetic induction; where, a coil placed at the vicinity of magnet moves when electric current is applied to cause a change in the magnetic flux of the coil, and a diaphragm coupled with coil moves accordingly. Referring to FIG. 2, actuators 5, 6 are formed of magnet 19, yoke 20, plate 20a, and movable coils 22a and 22b disposed in magnetic gap 21, respectively. Movable coils 22a and 22b are connected at the top end with vibration section 7. Input sections 3 and 4 are coupled with movable coils 22a and 22b, respectively. The above-structured actuators are generally called as the electro-dynamic type actuator. The electro-dynamic actuator works based on the electromagnetic force which is generated when electric current flows in a conductive body disposed in magnetic flux.

When an electric input is inputted into input section 3, movable coil 22a is provided with the following force F:

$$F = B\,l\,i \qquad (1)$$

where; B represents density of magnetic flux in magnetic gap 21, l is length of movable coil 22a in the magnetic gap, i is electric current flow in the movable coil.

Force F is transferred to vibration section 7, and vibration section 7 vibrates.

Vibration section 7 is connected also with the other movable coil 22b. The vibration of vibration section 7 due to a signal inputted into input section 3 causes a reverse electromotive force Vr with the other movable coil 22b:

$$Vr = v\ B\ l \qquad (2)$$

where; B represents density of magnetic flux in magnetic gap 21, l is length of movable coil 22b in the magnetic gap, v is vibration speed of vibration section 7.

When an audio power amplifier in the state of power supply ON is connected with electric input section 4, since the output impedance is ideally 0 Ω with a power amplifier which is in the state of power supply ON, the following electric current Ir generated at movable coil 22b by reverse electromotive force Vr flows via the power amplifier:

$$Ir = Vr / R \qquad (3)$$

where; R represents electrical resistance of movable coil 22b.

The electric current flows also in movable coil 22b; this causes electromagnetic force Fr with movable coil 22b, too, in the same manner as the above-described formula (1).

On the other hand, when an audio power amplifier in the state of power supply OFF is connected with electric input section 4, since the output impedance of the power amplifier is considered substantially to be indefinitely large, electric current due to reverse electromotive force Vr at movable coil 22b is 0; so, there will be no electromagnetic force Fr.

FIG. 3 is a characteristic chart which shows the transfer characteristic of an electromechanical converter of active noise reduction system in the first embodiment. In FIG. 3, curve in solid line 23 represents the sound characteristic when a power amplifier in the state of power supply OFF is connected to one of the electric input sections; whereas, curve in dotted line 24 represents the sound characteristic when a power amplifier in the state of power supply ON is connected to one of the electric input sections.

After comparing these two characteristic curves, it can be seen that there is a remarkable difference in the characteristic at a certain specific region.

As understood from the above descriptions, the electromagnetic force at movable coil 22b changes depending on whether an audio power amplifier connected to electric input section 4 is in the state of power supply ON or in the state of power supply OFF; which means that the vibration characteristic of vibration section 7 also changes. Namely, in the structure of an active noise reduction system in accordance with the present invention as shown in FIG. 1, the transfer characteristic of the route starting from the output of active noise reduction controller 1 through electromechanical converter 2 until the output of microphone 10 via space 8 changes; consequently, the filtered X-LMS algorithm does not work well.

In order to have the algorithm operate well, the operating condition of active noise reduction controller 1 needs to be modified depending on whether an audio power amplifier connected to electric input section 4 is in the state of power supply ON or otherwise. The power supply status can be known by, for example, having audio section operation detector 11 to detect the power supply status of audio section 9, or detect ingredients of a signal including DC component outputted from audio section 9. Output stage of power amplifier 18 of audio section 9 is structured BTL(Bridged TransformerLess), when the power supply to power amplifier is turned ON the DC potential goes up to 1/2 of the power supply voltage. By detecting the DC potential, power amplifier 18 can be judged whether it is in the state of power supply ON or not.

Based on the signal thus detected, control parameter modification section 12 modifies control parameter of the active noise reduction controller 1, viz. convergence coefficient $\mu$ and filter characteristic of transfer characteristic compensation section 15. The performance of noise reducing function is controlled so as it is not affected by a change in the operating conditions caused as the result of change in the power supply status of audio section 9. Thus, an active noise reduction system of stable operation can be offered. Describing more practically; when active noise reduction controller 1 detected from the above detection signal that power amplifier 18 was not supplied with power, the output of audio system to be inputted into electric input section 4 undergoes a compensation in the characteristic, so as a certain specific sound characteristic is provided regardless of the operation status of active noise controller 1.

The status of power supply to audio section 9 may be detected at audio section operation detector 11, by providing a relay or the like electrically controllable switch device at electric input section 4. When audio power amplifier 18 is detected to be in the state of power supply OFF, electric input section 4 is short-circuited in order to bring the electromagnetic force at movable coil 22b to be the same as that when the state of power supply to power amplifier 18 is ON. By so doing, a change in sound characteristic due to the noise control by active noise reduction controller is suppressed. Namely, in the structure of active noise reduction system in accordance with the present invention as shown in FIG. 1, the transfer characteristic of the route starting from the output of active noise reduction controller 1 through electromechanical converter 2 until the output of microphone 10 via space 8 is kept constant. Thus, it can offer an active noise reduction system where the performance of noise reduction is kept stable without fluctuation.

FIG. 4 shows the structure of other electromechanical converter in an active noise reduction system in accordance with the first embodiment of the present invention. Shown in FIG.4 are magnet 19, yoke 20 and two movable coils 22c and 22d which are mechanically coupled together and disposed in magnetic gap 21 formed with magnet 19 and plate 20a. Among the two movable coils, wire diameter of movable coil 22d can be made to be smaller than that of movable coil 22c by making the input impedance of the former movable coil higher. By disposing the smaller-wire diameter coil at the inner position in the direction towards the center of the electromechanical converter, or an electrodynamic type speaker, movable coil 22c which is to be disposed at the outer position with respect to the direction towards the center can also be combined evenly. An ideal movable coil is thus provided. These mechanically-combined two movable coils 22c and 22d are connected to vibration section 7. The terminal ends of two movable coils 22c, 22d are taken to the outside for forming electric input sections 3 and 4.

The above-described design takes after that of generally available speakers in the basic structure. The only point of difference is that a so-called voice coil has simply been replaced with two independent coils which have been mechanically combined together. Therefore, an electromechanical converter having two independent electric input sections can be readily provided. Furthermore, by inputting the output signal from audio section 9 into electric input section 3 of lower input impedance while the noise interference electric signal Va into electric input section 4 of higher input impedance, an active noise reduction system whose structure hardly gives any substantial influence on existing audio system can be readily provided.

INDUSTRIAL APPLICABILITY

An active noise reduction system in the present invention can realize the active noise reduction function without adding any substantial modification to existing audio system. It would be advantageous in providing a high-utility active noise reduction system at low cost.

## Claims

**1.** An active noise reduction system comprising
an active noise reduction controller for generating an interference signal of the same amplitude as that of vibration noise and reverse-phased,
a plurality of independent electric input sections, and
an electromechanical converter for converting respective electric signals inputted to the plurality of electric input sections into mechanical vibration of a single vibration section; wherein,
output from the active noise reduction controller is added to at least one of the plurality of electric input sections of the electromechanical converter to reducing the vibration noise.

**2.** The active noise reduction system of claim 1, wherein
output from the active noise reduction controller is added to at least one of the plurality of electric input sections of the electromechanical converter, while audio signal is added to the other electric input section.

**3.** The active noise reduction system of claim 1, wherein
the electromechanical converter is an electro-dynamic type speaker,
the plurality of electric input sections represent the terminal ends of respective independent movable coils mechanically combined together and disposed in a single magnetic gap.

**4.** The active noise reduction system of claim 1, wherein
when an input signal including DC signal is detected at an input section, among the plurality of electric input sections of the electromechanical converter, connected with a signal other than output from the active noise reduction controller,
parameter of the active noise reduction controller for noise control is modified.

**5.** The active noise reduction system of claim 1, wherein
when an apparatus coupled with an input section, among the plurality of electric input sections of the electromechanical converter, connected with a signal other than output from the active noise reduction controller is detected to be in the state of power supply ON,
parameter of the active noise reduction controller for noise reduction is modified.

**6.** The active noise reduction system of claim 3, in the electro-dynamic type speaker wherein

the plurality of independent movable coils of electric input section are different to each other in the input impedance.

**7.** The active noise reduction system of claim 6, in the electro-dynamic type speaker wherein
the plurality of independent movable coils of electric input section are mechanically combined together with the movable coil of higher input impedance disposed at the inner position in a direction towards the center of the electro-dynamic type speaker, while that of lower input impedance disposed at the outer position in the direction towards the center of electro-dynamic type speaker.

**8.** The active noise reduction system of claim 1, wherein
when the active noise reduction controller is detected to be in the state of power supply OFF at an input section, among the plurality of electric input sections of the electromechanical converter, connected with a signal other than output from the active noise reduction controller,
output characteristic of audio system to be outputted to the input section is modified so as a certain specific sound characteristic is provided irrespective of the operation status of active noise reduction controller.

**9.** The active noise reduction system of claim 1, wherein
when an apparatus coupled with an input section, among the plurality of electric input sections of the electromechanical converter, connected with a signal other than output from the active noise reduction controller is detected to be in the state of power supply OFF,
terminal of the input section is short-circuited so as to suppress a change in sound characteristic caused by the active noise reduction controller for noise reduction.

**10.** The active noise reduction system of claim 8, wherein
when the noise reduction controller is detected to be in the state of power supply OFF at an input section, among the plurality of electric input sections of the electromechanical converter, connected with output from the active noise reduction controller,
terminal of the input section is short-circuited so as to suppress a change in output characteristics of the audio apparatus and provide a certain specific sound characteristic irrespective of the operation status of active noise reduction controller.

FIG. 1

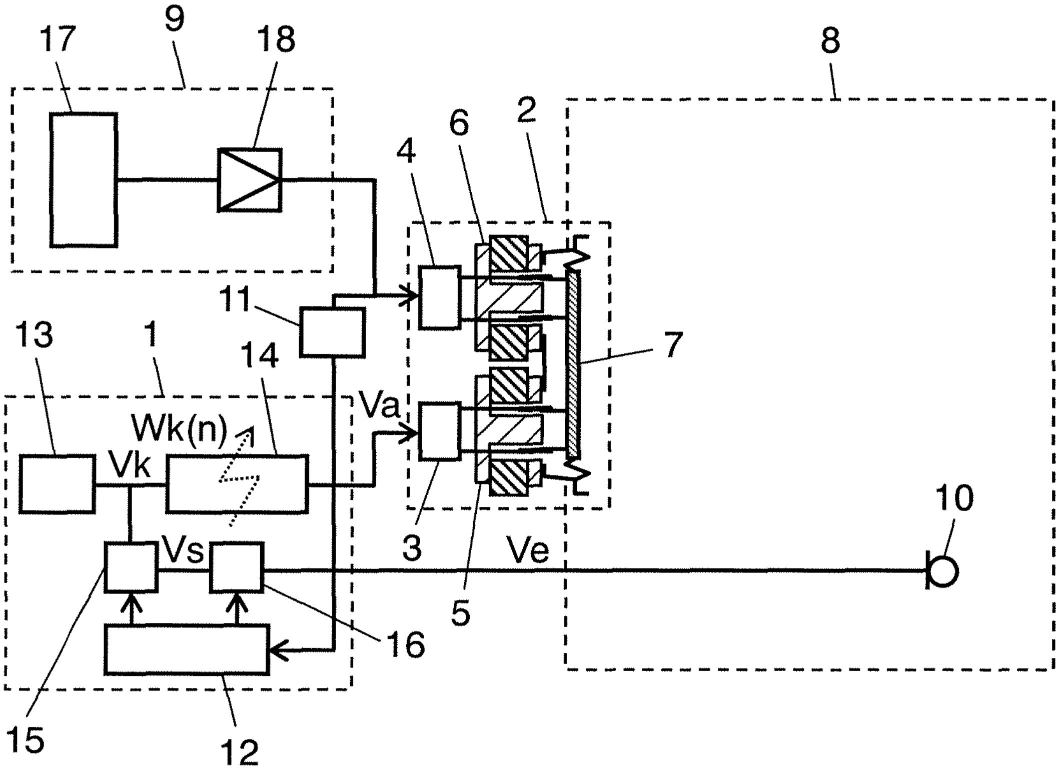

FIG. 2

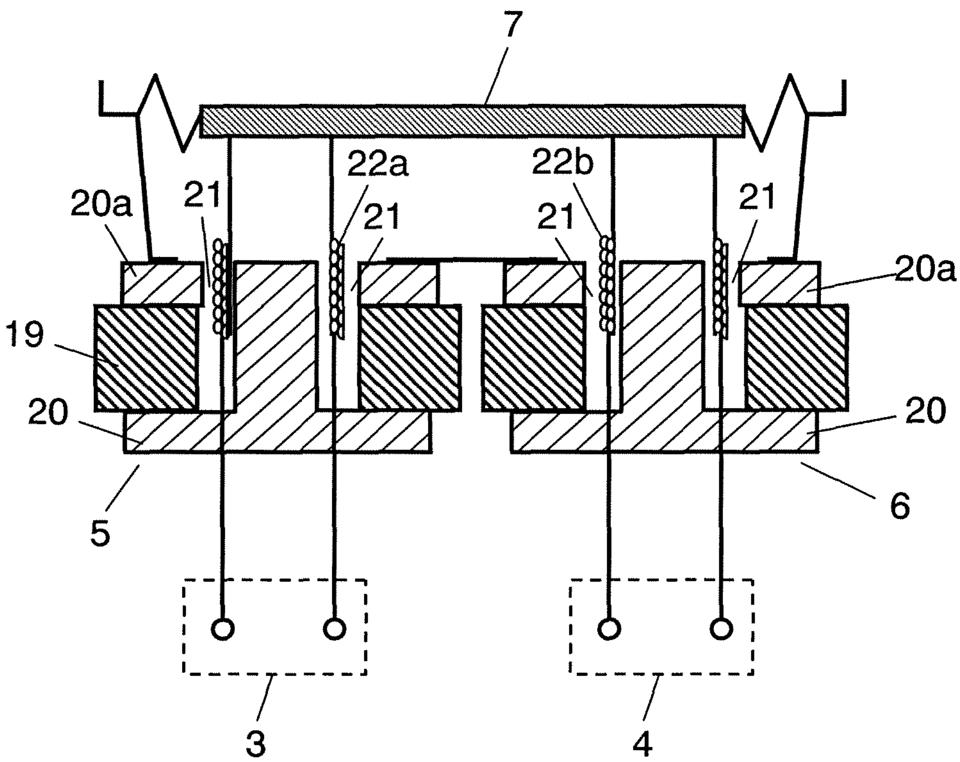

FIG. 3

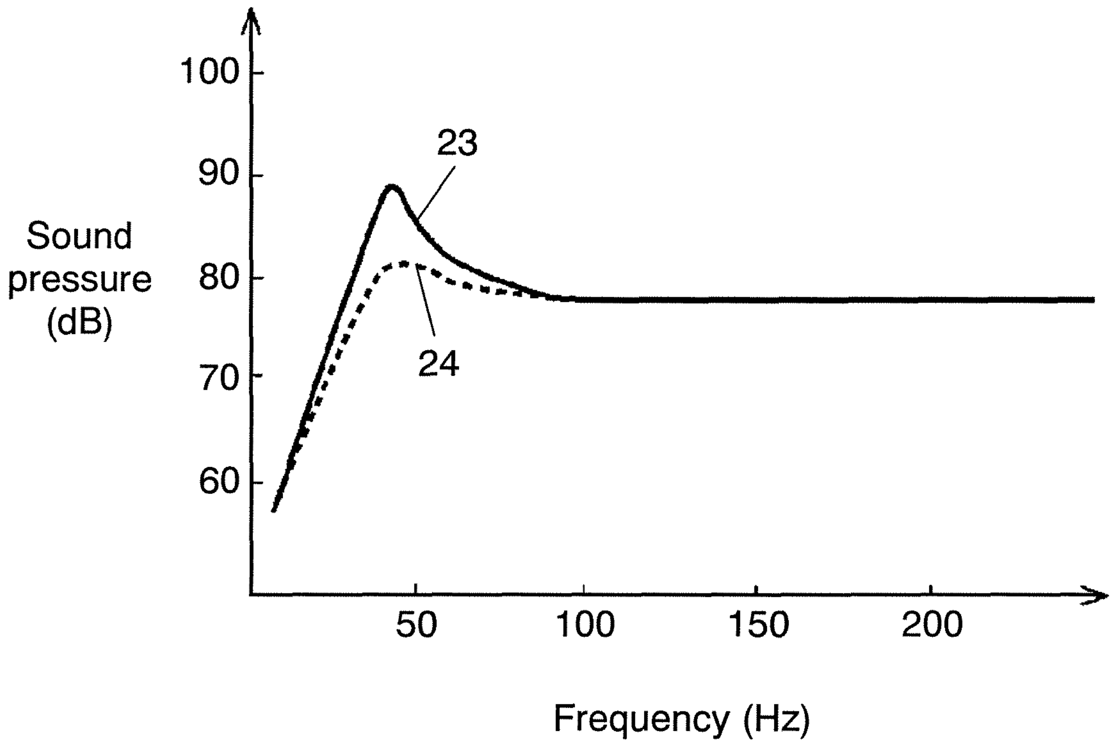
100
90
80
70
60
Sound
pressure
(dB)
23
24
50
100
150
200
Frequency (Hz)

FIG. 4

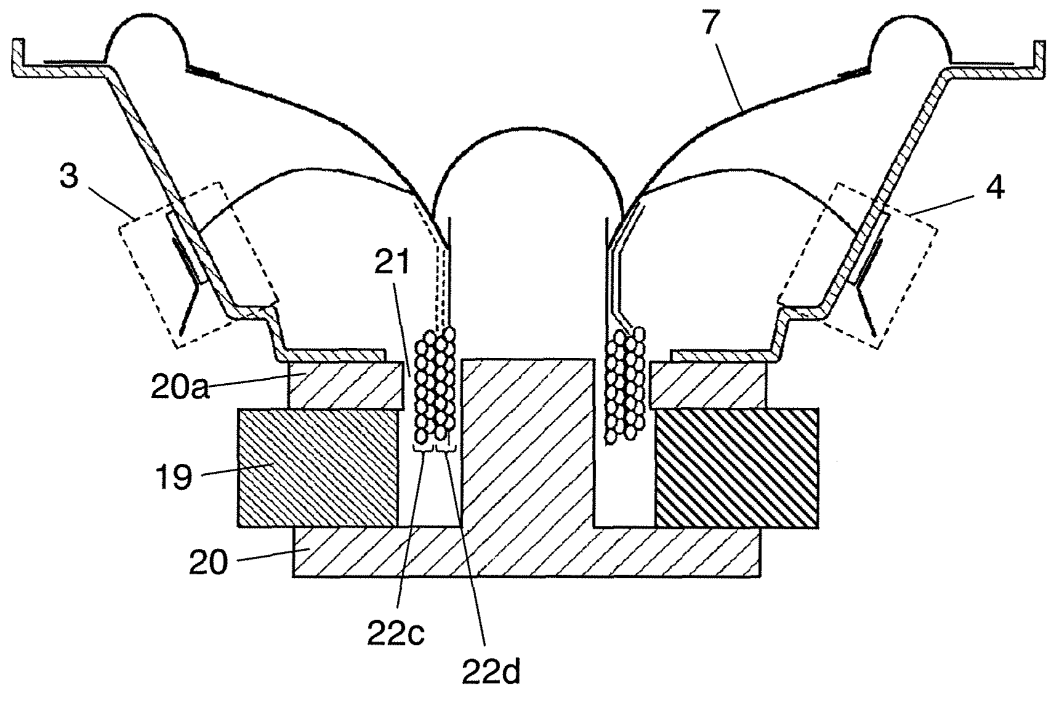

**INTERNATIONAL SEARCH REPORT**

International application No.
PCT/JP2007/064539

A. CLASSIFICATION OF SUBJECT MATTER
*G10K11/178*(2006.01)i, *B60R11/02*(2006.01)i, *H04R3/00*(2006.01)i, *H04R9/04*(2006.01)i

According to International Patent Classification (IPC) or to both national classification and IPC

B. FIELDS SEARCHED

Minimum documentation searched (classification system followed by classification symbols)
G10K11/178, B60R11/02, H04R3/00, H04R9/04

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y<br>A | JP 3003344 U (Foster Electric Co., Ltd.),<br>10 August, 1994 (10.08.94),<br>Par. Nos. [0008] to [0015]; Figs. 1 to 4<br>(Family: none) | 1-5<br>6-8<br>9,10 |
| Y<br>A | JP 09-289699 A (Sony Corp.),<br>04 November, 1997 (04.11.97),<br>Par. Nos. [0037] to [0038]; Fig. 4<br>(Family: none) | 6,7<br>9,10 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 25 October, 2007 (25.10.07) | 06 November, 2007 (06.11.07) |
| Name and mailing address of the ISA/<br>Japanese Patent Office | Authorized officer |
| Facsimile No. | Telephone No. |

Form PCT/ISA/210 (second sheet) (April 2007)

**INTERNATIONAL SEARCH REPORT**

International application No.
PCT/JP2007/064539

C (Continuation). DOCUMENTS CONSIDERED TO BE RELEVANT

| Category* | Citation of document, with indication, where appropriate, of the relevant passages | Relevant to claim No. |
|---|---|---|
| Y<br>A | Microfilm of the specification and drawings annexed to the request of Japanese Utility Model Application No. 154333/1982(Laid-open No. 059083/1984)<br>(Sony Corp.),<br>17 April, 1984 (17.04.84),<br>Page 8, line 14 to page 12, line 11<br>(Family: none) | 8<br>9,10 |
| A | JP 63-102597 A (Matsushita Electric Industrial Co., Ltd.),<br>07 May, 1988 (07.05.88),<br>Full text; Fig. 1<br>(Family: none) | 1-10 |
| A | JP 10-290492 A (Kenwood Corp.),<br>27 October, 1998 (27.10.98),<br>Full text; Fig. 1<br>(Family: none) | 1-10 |

Form PCT/ISA/210 (continuation of second sheet) (April 2007)

**INTERNATIONAL SEARCH REPORT**

International application No.
PCT/JP2007/064539

**Box No. II Observations where certain claims were found unsearchable (Continuation of item 2 of first sheet)**

This international search report has not been established in respect of certain claims under Article 17(2)(a) for the following reasons:

1. [X] Claims Nos.:
because they relate to subject matter not required to be searched by this Authority, namely:

2. [ ] Claims Nos.:
because they relate to parts of the international application that do not comply with the prescribed requirements to such an extent that no meaningful international search can be carried out, specifically:

3. [ ] Claims Nos.:
because they are dependent claims and are not drafted in accordance with the second and third sentences of Rule 6.4(a).

**Box No. III Observations where unity of invention is lacking (Continuation of item 3 of first sheet)**

This International Searching Authority found multiple inventions in this international application, as follows:

For the reasons below, this international application contains four inventions not satisfying the requirement of unity of invention.
Main invention: claims 1-3, 6, 7
Second invention: claims 4, 5
Third invention: claims 8, 10
Fourth invention: claims 9

The search has been conducted on the assumption that the invention of claims 1, 2 is "the first mentioned invention ("main invention") and has revealed that the technical feature of the main invention is not novel since it is disclosed (Continued to the extra sheet.)

1. [ ] As all required additional search fees were timely paid by the applicant, this international search report covers all searchable claims.

2. [X] As all searchable claims could be searched without effort justifying additional fees, this Authority did not invite payment of additional fees.

3. [ ] As only some of the required additional search fees were timely paid by the applicant, this international search report covers only those claims for which fees were paid, specifically claims Nos.:

4. [ ] No required additional search fees were timely paid by the applicant. Consequently, this international search report is restricted to the invention first mentioned in the claims; it is covered by claims Nos.:

**Remark on Protest** the

[ ] The additional search fees were accompanied by the applicant's protest and, where applicable, payment of a protest fee.

[ ] The additional search fees were accompanied by the applicant's protest but the applicable protest fee was not paid within the time limit specified in the invitation.

[ ] No protest accompanied the payment of additional search fees.

Form PCT/ISA/210 (continuation of first sheet (2)) (April 2007)

**INTERNATIONAL SEARCH REPORT**

International application No.
PCT/JP2007/064539

Continuation of Box No.III of continuation of first sheet(2)

in document 1: JP 3003344 U (Foster Electric Co., Ltd.), 10 August, 1994 (10.08.94), [0008] - [0015], figures 1-4.

"The active noise controller" mentioned in claim 1 is disclosed as "the filter circuit 10 and the amplifier 9" of document 1. "The independent electric input section" mentioned in claim 1 is disclosed as both ends of "the audio signal reproduction coil 1b and the ANR coil 1c" of document 1. "The electromechanical converter" mentioned in claim 1 is disclosed as "the driver unit 8" of document 1. "The technique of inputting the output from the active noise into at least one of the electric input sections of the electromechanical converter and inputting the audio signal into the other electric input section" stated in claim 2 is disclosed in figure 4 of document 1.

Therefore, the technical feature of the main invention cannot be "a special technical feature" within the meaning of PCT Rule 13.2, second sentence.

As long as the inventions of claims 4, 5 (the second invention) are compared with the prior art, "the (temporary) special technical feature" of the second invention is that "the parameter for noise control of the active noise controller is varied when the state that power is supplied to the connected device is detected at an input section out of the electric input sections of the electromechanical converter other than the input electric section to which the output from the active noise controller is connected."

As long as the inventions of claim 8 (the third invention) is compared with the prior art, "the (temporary) special technical feature" of the third invention is that "the audio system has an acoustic characteristic constant irrespective of the operation of the active noise controller by correcting the output characteristic of the audio system which outputs a signal to the input section when the state that power is not supplied to the active noise controller is detected at an input section out of the electric input sections of the electromechanical converter other than the input electric section to which the output from the active noise controller is connected."

As long as the inventions of claim 9 (the fourth invention) are compared with the prior art, "the (temporary) special technical feature" of the fourth invention is that "the variation of the acoustic characteristic for controlling the noise of the active noise controller is suppressed by short-circuiting the terminals of the input section when the state that power is not supplied to the connected device is detected at an input section out of the electric input sections of the electromechanical converter other than the input electric section to which the output from the active noise controller is connected."

Therefore, no technical relation between the main invention and the second to fourth inventions involving one or more of the same or corresponding special technical features can be seen

Since the invention of claim 3 could be searched when the invention of claim 1 was searched, the invention of claim 3 is categorized into the same invention division as that of the invention of claim 1. Since the invention of claims 6, 7 is merely an aggregation of the invention of claim 3 and a well-known technique, the invention of claims 6, 7 is categorized into the same invention division as that of the invention of claim 3.

Form PCT/ISA/210 (extra sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H6130971 B